# EUROPEAN PATENT SPECIFICATION

(11) **EP 4 165 136 B1**
(45) Date of publication and mention of the grant of the patent: **07.08.2024**
(21) Application number: 21739229.9
(22) Date of filing: 10.06.2021
(51) Int. Cl.: C09D 5/00

(54) **TWO-COMPONENT AQUEOUS COATING COMPOSITION AND WOODEN ARTICLE**
WÄSSRIGE ZWEIKOMPONENTEN-BESCHICHTUNGSZUSAMMENSETZUNG UND HOLZARTIKEL
COMPOSITION DE REVÊTEMENT AQUEUSE À DEUX COMPOSANTS ET ARTICLE EN BOIS

(30) Priority: 15.06.2020 CN 202010541394
(43) Date of publication of application: 19.04.2023
(73) Proprietor: Guangdong Huarun Paints Co., Ltd., Foshan, Guangdong 528306 (CN)
(72) Inventor: YANG, Wei, Shanghai 201811 (CN); YU, Naiwo, Foshan, Guangdong 528306 (CN)
(74) Representative: Novagraaf Group
(86) International application number: PCT/CN2021/099337
(87) International publication number: WO 2021/254239

(56) References cited:
- DE-A1- 102007 027 027
- US-A1- 2006 062 923

## Description

### CROSS-REFERENCE TO RELATED APPLICATIONS

The present application claims priority to Chinese Patent Application No. 202010541394.7, filed on June 15, 2020.

### TECHNICAL FIELD

The present invention relates to an aqueous coating composition. More specifically, the present invention relates to a high-performance two-component aqueous coating composition, which is suitable for use as a sealer primer, transparent or colored primer, topcoat, solid color paint, and the like, and is particularly suitable for being applied on the surface of a wooden substrate.

### BACKGROUND

At present, environment and energy are the two major challenges that people are facing. In order to meet this challenge, the coating industry is gradually shifting from traditional varieties of high pollution, high energy consumption, and extremely dependency on petroleum industry products to environmentally friendly and resource-saving products such as aqueous coatings, radiation curable coatings, powder coatings and high-solid coatings. With the introduction of the Chinese Chemical Industry Standard of "Indoor Water-Based Wood Coatings", the aqueous coating composition for wooden substrate have developed rapidly. Recently, the investment in the research and development of the aqueous wood paint is increasing substantially, and correspondingly, the requirements to the aqueous wood paint are also increasing.

Compared with solvent two-component coating compositions, the existing aqueous two-component coating compositions on the market have the problems of poor fullness, low application solid content, and poor transparency. Usually, in the fully sealing process to achieve high fullness, it is often necessary to spray the traditional two-component aqueous coating composition 4-5 times to meet this requirement and the resultant paint film made will have the film sag in the later stage. In addition, the traditional aqueous two-component coating composition is likely to cause grain puffing issues when it is coated on wooden substrates, especially solid wood substrates.
DE 10 2007 027 027 A1 describes polyurea and/or polyurethane-polyorganosiloxane compositions and processes for their preparation. US 2006/0062923 describes film-forming automotive coating compositions and two-component packages.

Therefore, there is a need in the coating art to an aqueous coating composition that are particularly suitable for wooden substrates.

### SUMMARY

In one aspect, the present disclosure provides a two-component aqueous coating composition, the coating composition comprising: a) at least one primary agent, the at least one primary agent comprising i) at least one fatty acid derived polyol; and ii) at least one polyether modified polysiloxane; and b) at least one aqueous polyisocyanate curing agent, wherein the at least one polyether modified polysiloxane is present in an amount of at least 2 wt% relative to the total weight of the at least one primary agent and wherein the at least one fatty acid-derived polyol has a solid content of 90 wt% or higher. Preferably, the at least one polyether modified polysiloxane is present in an amount ranging from 2 to 10 wt% or from 4 to 10 wt% relative to the total weight of the at least one primary agent, more preferably the at least one polyether modified polysiloxane is present in an amount ranging from 2 to 8 wt% relative to the total weight of the at least one primary agent, and even more preferably the at least one polyether modified polysiloxane is present in an amount ranging from 3 to 5 wt% relative to the total weight of the at least one primary agent.

In an embodiment of the present application, the two-component aqueous coating composition has an application solid content of 70 to 90 wt% when reaching an application viscosity of 120 s or less at 25°C.

In an embodiment of the present application, the two-component aqueous coating composition has a volatile organic compound (VOC) content of 300 g/L or less when reaching an application viscosity of 120 s or less at 25°C.

In a preferred embodiment of the present application, the two-component aqueous coating composition has an application solid content of 70 to 90 wt% and has a volatile organic compound (VOC) content of 300 g/L or less when reaching an application viscosity of 120 s or less at 25°C.

In another aspect, the present disclosures provides a wooden article comprising a wooden substrate having at least one main surface; and at least one paint film formed from the two-component aqueous coating composition according to the present application which is directly or indirectly coated on the at least one main surface. Preferably, the two-component aqueous coating composition according to the present invention can be used as one or all, preferably all of the sealer primer, the second primer, and the third primer on the wooden substrate.

The inventors of the present invention surprisingly found that in the formulation of a two-component aqueous coating composition, a combination of at least one fatty acid-derived polyol, preferably at least one castor oil fatty acid-derived polyol, with a relatively large amount of at least one polyether-modified polysiloxane as well as a variety of aqueous curing agents and/or aqueous dispersions of hydroxyl acrylic polymers may be comparable well. Thus, the resulting coating composition can not only obtain coatings with high fullness, high transparency and/or high hardness, but also have significantly higher application solid content for example, up to 70-90%, than the traditional two-component aqueous coating compositions that generally have an application solid content of 30-35%. Therefore, the national standard requirement of VOC content less than 300 g/L may be met.

Moreover, the inventors of the present invention further surprisingly found that the two-component aqueous coating composition according to the present invention can achieve an excellent barrier effect of grain puffing.

The details of one or more embodiments of the invention will be set forth in the description below. The other features, objectives, and advantages of the invention will become apparent.

### BRIEF DESCRIPTION OF DRAWINGS

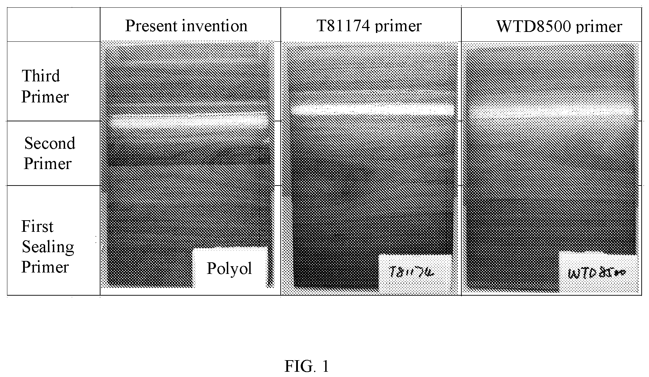

Figure 1 shows photographs of the coating formed from the two-component aqueous coating composition according to the present invention that is coated on the surface of a black walnut veneer substrate 1-3 times as a first primer, a second primer and a third primer; the coating formed from T 81174 from Guangdong Huarun Painting Co., Ltd. that is coated on the surface of a black walnut veneer substrate 1-3 times as a first primer, a second primer and a third primer, and the coating formed from WTD 8500 from Guangdong I-Iuarun Painting Co., Ltd. that is coated on the surface of a black walnut veneer substrate 1-3 times as a first primer, a second primer and a third primer.

### DEFINITION

As used herein, "a", "an", "the", "at least one", and "one or more" are used interchangeably. Thus, for example, a coating composition that comprises "an" additive can be interpreted to mean that the coating composition includes "one or more" additives.

Throughout the present invention, where compositions are described as having, including, or comprising specific components or fractions, or where processes are described as having, including, or comprising specific process steps, it is contemplated that the compositions or processes as disclosed herein may further comprise other components or fractions or steps, whether or not, specifically mentioned in this invention, as along as such components or steps do not affect the basic and novel characteristics of the invention, but it is also contemplated that the compositions or processes may consist essentially of, or consist of, the recited components or steps.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

it should be noted that in the specification, relational terms such as first and second are only used to distinguish one entity or operation from another entity or operation, and it is not necessary to require or imply that there is any such actual relationship or order between these entities or operations. As an exemplary illustration, the "first primer" and "second primer" used when coating the wood substrate will be understood as that the first primer and the second primer are each independent, and their primary agent(s) and curing agent(s) are also independent in type and amount, and can be the same or different.

In the context of the present application, the term "two-component aqueous coating composition" refers to a coating composition usually composed of two components, which components are packaged separately from each other, and are mixed prior to use according to the required ratio and then diluted as needed for coating to form a coating.

As used herein, the term "a fatty acid derived polyol" refers to a polyol having structural moieties derived from fatty acids, which can be obtained from fatty acids through one or more reaction steps. Generally, the fatty acids comprise fatty acids with 8 or more carbon atoms, for example, fatty acids with 8 to 28 carbon atoms, preferably 10 to 20, and the fatty acids may comprise hydroxyl groups or not comprise hydroxyl groups and may be saturated or unsaturated. In some cases, fatty acid oils are also applicable.

As used in the context of "polyether-modified polysiloxane", the term "effective silicon content" refers to the amount of polydimethylsiloxane moiety contained in the polysiloxane.

As used in the content of "coating composition", the term "application viscosity" refers to a viscosity at which the coating composition can be applied normally without the application problems of hanging or too viscous.

As used in the content of "coating composition", the term "application solid content" refers to the non-volatile content contained in the coating composition that can be applied normally, which usually is measured after the coating composition is baked in an atmospheric oven at 150°C for 1 hour. Generally, during the application process, if a mixture obtained by mixing the components of the coating composition is too viscous, a diluent is required to be added for dilution, in order to meet the application requirement. Therefore, the application solid content is usually lower than the solid content of the coating composition itself. In some embodiments of the present invention, the coating composition according to the present invention can reach an application solid content of 70-90 wt%.

As used in the present invention, the term "volatile organic compound (VOC)" refers to any carbon-containing compound that participates in atmospheric photochemical reactions except for carbon monoxide, carbon dioxide, carbonic acid, metal carbides or carbonates. Generally, volatile organic compounds have a vapor pressure of 0.1 mm Hg or higher. As used herein, "volatile organic compound content (VOC content)" refers to the weight of VOC per volume of composition or coating composition, for example, as g/L as measured according to GBT23986-2009.

As used herein, the term "sealing primer" refers to a coating composition that can be directly applied to a substrate, such as a wooden substrate, and dried, crosslinked, or otherwise hardened to form a non-sticky continuous film with sufficient adhesion on the surface of the substrate, which continuous film can effectively block the migration of free active components in the substrate (including but not limited to tannins, grease, and the like) onto the surface of the film.

As used herein, the term "primer" refers to a coating composition that can be applied to a substrate, and dried, crosslinked, or otherwise hardened to form a non-sticky continuous film having sufficient adhesion to the surface of the substrate, which continuous film can have a certain protective effect on the surface of the substrate.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

### DETAILED DESCRIPTION

According to the first aspect of the present disclosure, a two-component aqueous coating composition is provided, which comprises: a) at least one primary agent, the at least one primary agent comprising i) at least one fatty acid derived polyol; ii) at least one polyether modified polysiloxane; and b) at least one aqueous polyisocyanate curing agent, wherein the at least one polyether modified polysiloxane is present in an amount of at least 2 wt% relative to the total weight of the at least one primary agent and wherein the at least one fatty acid-derived polyol has a solid content of 90 wt% or higher. Preferably, the at least one polyether modified polysiloxane is present in an amount ranging from 2 to 10 wt% or from 4 to 10 wt% relative to the total weight of the at least one primary agent, more preferably the at least one polyether modified polysiloxane is present in an amount ranging from 2 to 8 wt% relative to the total weight of the at least one primary agent, and even more preferably the at least one polyether modified polysiloxane is present in an amount ranging from 3 to 5 wt% relative to the total weight of the at least one primary agent.

### PRIMARY AGENT(S)

According to embodiments of the present invention, the at least one primary agent comprises at least one fatty acid derived polyol. In short, fatty acids serve as one of the raw materials constituting the above-mentioned polyols. As mentioned above, "a fatty acid derived polyol" refers to a polyol having structural moieties derived from fatty acids, which can be obtained from fatty acids through one or more reaction steps.

According to embodiments of the present invention, the at least one fatty acid derived polyol is one or more selected from: (A-1) a product of a hydroxyl-containing fatty acid with an polyhydric alcohol via esterification; (A-2) a product obtained from a hydroxyl-containing unsaturated fatty acid via polymerization; (A-3) a product obtained from a polymer of an unsaturated fatty acid via reduction of carboxyl group; (A-4) a product obtained from an unsaturated fatty acid and/or an esterification product of an unsaturated fatty acid with an polyhydric alcohol via modification by introducing a hydroxyl group; and (A-5) a hydroxyl functional resin obtained by condensation reaction of a polyhydric alcohol, a polybasic acid, a fatty acid including fatty acid ester or naturally occurring oils and optionally a monofunctional acid, optionally in the presence of a catalyst and optionally in the presence of a solvent, as an illustrative illustration.

### Polyol (A-1)

As described above, the at least one fatty acid derived polyol (A-1) is a product of a hydroxyl-containing fatty acid with a polyhydric alcohol via esterification wherein the hydroxyl-containing fatty acid may be a saturated fatty acid or an unsaturated fatty acid.

As a raw material for forming the component (A-1), the fatty acid may comprise a fatty acid having 8 or more carbon atoms, for example, a fatty acid having 8 to 28, preferably 10 to 20 carbon atoms. More specifically, as examples of hydroxyl-containing fatty acids, hydroxyl-containing unsaturated fatty acids such as ricinoleic acid and transricinoleic acid can be given, or hydroxyl-containing saturated fatty acids such as 12-hydroxystearic acid and cerebroic acid can be given. These hydroxyl-containing fatty acids may be used alone or may be used in combination.

As a raw material for forming the component (A-1), the polyhydric alcohol may comprise glycerin, ethylene glycol, polyethylene glycol, propylene glycol, polypropylene glycol, trimethylolpropane, pentaerythritol, sorbitol, and the like. These polyhydric alcohol may be used alone or can be used in combination.

As an example of the above-mentioned component (A-1), esterification products of the above-mentioned hydroxyl-containing fatty acids and the above-mentioned polyhydric alcohols can be used.

In some embodiments of the present invention, a substance containing the component (A-1) may comprise castor oil, hydrogenated castor oil, and the like. Castor oil is a vegetable oil made from seeds of castor oil, which is known as glycerides of unsaturated fatty acids such as ricinoleic acid and oleic acid and saturated fatty acids such as palmitic acid. Herein, as ricinoleic acid is a hydroxyl-containing fatty acid, castor oil or hydrogenated castor oil as a modified product of castor oil may be used as a fatty acid derived polyol.

These components (A-1) may be used alone or can be used in combination.

### Polyol (A-2)

As described above, the fatty acid-derived polyol (A-2) is a product obtained from a hydroxyl-containing unsaturated fatty acid via polymerization.

As a raw material for forming the component (A-2), the fatty acid may comprise a fatty acid having 8 or more carbon atoms, for example, a fatty acid having 8 to 28, preferably 10 to 20 carbon atoms, and additionally have one or more carbon-carbon double bonds. More specifically, as examples of the hydroxyl group-containing unsaturated fatty acids, the above-mentioned hydroxyl group-containing unsaturated fatty acids for forming the component (A-1) can be used, and preferably comprises ricinoleic acid, transricinoleic acid, and the like.

There is no particular limitation to the polymerization product, and the product may comprise dimers, trimers, tetramers, and the like, preferably dimers. Therefore, as component (A-2), the above mentioned dimer, trimer, tetramer, and the like, preferably dimer of the hydroxyl-containing unsaturated fatty acid, may be included. These components (A-2) can be used alone or can be used in combination.

### Polyol (A-3)

As described above, the fatty acid-derived polyol (A-3) refers to a product obtained from a polymer of an unsaturated fatty acid via reduction of carboxyl group.

As a raw material for forming the component (A-3), the unsaturated fatty acid may comprise an unsaturated fatty acid having 8 or more carbon atoms, for example, an unsaturated fatty acid having 8 to 28, preferably 10 to 20 carbon atoms. More specifically, the unsaturated fatty acids may comprise hydroxyl-containing unsaturated fatty acids such as ricinoleic acid and transricinoleic acid; and unsaturated fatty acid that do not contain hydroxyl groups such as myristic acid, palmitoleic acid, palmitoleic acid, oleic acid, elaidic acid, isooleic acid, codoleic acid, eicosaenoic acid, erucic acid, nervonic acid, linoleic acid, eicosadienoic acid, docosadienoic acid, linolenic acid, pinoleic acid, tungoleic acid, mead acid, eicosatrienoic acid, stearidonic acid, arachidonic acid, eicosatetraenoic acid, adrenalic acid and the like.

There is no particular limitation to the polymer, and the polymer may comprise dimers, trimers, tetramers, and the like, preferably dimers. Therefore, as component (A-3), the above mentioned dimer, trimer, tetramer, and the like, preferably dimer of the hydroxyl-containing unsaturated fatty acid, may be included.

The method for reducing the carboxyl group of the polymer of unsaturated fatty acid is known to those skilled in the art.

The above mentioned polymer of unsaturated fatty acid may be reduced by a method known per se into a polyol that can be used as polyols (A-3). As an example of the component (A-3), for example, reduction products from dimers of ricinoleic acid, oleic acid, linoleic acid, linolenic acid, and tungoleic acid, or commercially available products such as those commercially available from PRIPOL2033 from CRODA may be used.

These components (A-3) can be used alone or can be used in combination.

### Polyol (A-4)

As described above, the fatty acid-derived polyol (A-4) refers to a product obtained from an unsaturated fatty acid and/or an esterification product of an unsaturated fatty acid with a polyhydric alcohol via modification by introducing a hydroxyl group

As a raw material for forming the component (A-4), the unsaturated fatty acid may comprise an unsaturated fatty acid having 8 or more carbon atoms, for example, an unsaturated fatty acid having 8 to 28, preferably 10 to 20 carbon atoms. More specifically, the unsaturated fatty acids may comprise hydroxyl-containing unsaturated fatty acids such as ricinoleic acid and transricinoleic acid; and unsaturated fatty acid that do not contain hydroxyl groups such as myristic acid, palmitoleic acid, palmitoleic acid, oleic acid, elaidic acid, isooleic acid, codoleic acid, eicosaenoic acid, erucic acid, nervonic acid, linoleic acid, eicosadienoic acid, docosadienoic acid, linolenic acid, pinoleic acid, tungoleic acid, mead acid, eicosatrienoic acid, stearidonic acid, arachidonic acid, eicosatetraenoic acid, adrenalic acid and the like.

As a raw material for forming the component (A-1), the polyhydric alcohol may comprise glycerin, ethylene glycol, polyethylene glycol, propylene glycol, polypropylene glycol, trimethylolpropane, pentaerythritol, sorbitol, and the like. These polyhydric alcohol may be used alone or can be used in combination.

As the esterification product of unsaturated fatty acid and polyhydric alcohol, soybean oil, castor oil, palm oil, rapeseed oil, and the like can be used.

The modification method of unsaturated fatty acids or esterification products of unsaturated fatty acids and polyhydric alcohols by introducing a hydroxyl group is known per se. As an exemplary illustration of the method, peroxides can be used to epoxidize the unsaturated groups of the unsaturated fatty acids and/or the esterification product of unsaturated fatty acids and polyhydric alcohol, and then the resulting epoxides react with monohydric or polyhydric alcohols to form the polyols (A-4). Examples of peroxides used to epoxidize the above-mentioned unsaturated groups include, but are not limited to, peracetic acid, hydrogen peroxide, and the like. Examples of monohydric alcohols used for hydroxyl introduction of the above-mentioned epoxides include, but are not limited to, linear primary alcohols such as methanol, ethanol, and propanol; secondary alcohols such as isopropanol; unsaturated group-containing alcohols such as allyl alcohol; branched alcohols such as isobutanol and neopentyl alcohol; cyclic alcohols such as cyclohexanol and benzyl alcohol; ethylene glycol monoalkyl ethers such as ethylene glycol monomethyl ether, ethylene glycol monoethyl ether, and ethylene glycol monopropyl ether; diethylene glycol monoalkyl ethers such as diethylene glycol monomethyl ether; propylene glycol monoalkyl ethers such as propylene glycol monomethyl ether; dipropylene glycol monoalkyl ethers such as dipropylene glycol monomethyl ether and the like. These monohydric alcohols can be used alone or in combination of two or more kinds. Examples of polyhydric alcohols used for hydroxyl introduction of the above-mentioned epoxides include, but are not limited to, glycerin, ethylene glycol, polyethylene glycol, propylene glycol, polypropylene glycol, butylene glycol, neopentyl glycol, trimethylol propane, pentaerythritol, sorbitol, and the like. These polyhydric alcohol can be used alone or in combination of two or more.

As an example of the component (A-4), commercially available products such as Sovermol 750, Sovermol 760, Sovermol 805, Sovermol 815, Sovermol 819, and the like from BASF Corporation can be used.

### Polyol (A-5)

As described above, the fatty acid-derived polyol (A-5) may be a hydroxyl functional resin obtained by condensation reaction of a polyhydric alcohol, a polybasic acid, a fatty acid including fatty acid ester or naturally occurring oils and optionally a monofunctional acid.

The polyhydric alcohol is the polyhydric alcohol involved in the polyols (A-1) and (A-4).

The polybasic acid includes any polybasic acid known in the art for preparing alkyd resins and/or polyester resins. As examples of polybasic acids, dibasic or its anhydrides, such as phthalic acid and its anhydrides, isophthalic acid, terephthalic acid, succinic acid, adipic acid, suberic acid, azelaic acid, sebacic acid, tetrachlorophthalic acid, tetrabromophthalic acid, maleic acid, fumaric acid, mesaconic acid, citraconic acid, dichloromaleic acid; tribasic acid or its anhydride, such as trimellitium acid; tetrabasic acid or its anhydride, such as pyromellitic anhydride; and combinations thereof may be given.

As a raw material for forming the component (A-5), the fatty acid may include a fatty acid having 8 or more carbon atoms, for example, a fatty acid having 8 to 28, preferably 10 to 20 carbon atoms, and the fatty acid may comprise hydroxyl groups or not comprise hydroxyl groups and may be saturated or unsaturated. In some cases, fatty acid oils are also applicable. Representative oils include vegetable oils, such as carona oil, castor oil, dehydrated castor oil, coconut oil, corn oil, cottonseed oil, groundnut oil, linseed oil, peanut oil, ricinene oil, safflower oil, soybean oil, sunflower oil, tall oil, tung oil, walnut oil, wood oil, and the like; animal fats such as fish oil, lard, chicken oil, tallow, and the like; and combinations thereof.

As an optional raw material for forming the component (A-5), any monobasic acid known in the art for preparing alkyd resin and/or polyester resin can be used. Examples of representative monobasic acids may include benzoic acid, acetic acid, propionic acid, tert-butyl benzoic acid, or a combination thereof.

The condensation of fatty acids, polybasic acids, polyhydric alcohols, and monobasic acids is known per se. As an illustrative illustration, the condensation is optionally carried out in the presence of a catalyst and optionally in the presence of a solvent. Catalysts can be used to promote the formation of alkyd resins. The catalyst can be any catalyst known in the art for forming alkyd resins. Preferably, the catalyst is an acid catalyst, such as FASCAT 4100. The amount of catalyst added can be determined by those skilled in the art through routine experiments. Solvents can be used to dilute the reaction mixture. The solvent can be any solvent known in the art for forming alkyd resins and/or polyesters.

The above component (A-1), component (A-2), component (A-3), component (A-4) and component (A-5) can be used alone or in combination of two or more.

In some embodiments according to the present invention, the at least one fatty acid derived polyol not only has a high solid content, but also has a very low viscosity, and thus can be used to formulate a coating composition with a low VOC content. According to the present invention, the at least one fatty acid derived polyol has a solid content of 90% by weight or higher. According to one embodiment, the at least one fatty acid-derived polyol has preferably a solid content of 95% by weight or higher, and even a solid content of 100% by weight. In one embodiment of the present invention, the at least one fatty acid derived polyol has a viscosity of 800 mPa.s or lower, preferably a viscosity of 750 mPa.s or lower, or more preferably a viscosity of 700 mPa.s or lower, and a viscosity of not less than 500 mPa.s, preferably not less than 550 mPa.s. The viscosity is measured using a rotational viscometer at 25°C. In another embodiment of the present invention, the at least one fatty acid derived polyol has a solid content of 90 wt% or higher and a viscosity of 800 mPa·s or lower.

Preferably, in the two-component coating composition according to the present invention, the amount of at least one fatty acid derived polyol can vary in a wide range. For example, the at least one fatty acid derived polyol can be present in an amount of 60 wt% or more by weight relative to the total amount of the at least one primary agent. Preferably, the at least one fatty acid derived polyol can be present in an amount of 65 wt% or more by weight, preferably 70% by weight or higher, more preferably 75% by weight or higher, even more preferably 80 % by weight or higher, more preferably 85 wt% or higher, but not higher than 98 wt%, relative to the total amount of the at least one primary agent.

In the two-component coating composition according to the present invention, the at least one primary agent further comprises at least one polyether-modified polysiloxane. As mentioned above, in the formulation of the coating composition, a certain amount of at least one polyether-modified polysiloxane can be incorporated to improve the compatibility of at least one fatty acid derived polyol with at least one aqueous isocyanate curing agent and aqueous resins, thereby providing an aqueous coating composition with significantly improved coating transparency. The inventors of the present invention surprisingly found that the amount of at least one polyether-modified polysiloxane as incorporated is an important parameter that affects the performance of the coating composition. Too low amount of at least one polyether-modified polysiloxane is not enough to improve the miscibility of the components of the coating composition; and too high amount of at least one polyether-modified polysiloxane may be unfavorable to the hardness of the coating or may cause the coating to shrink. Generally, in the coating composition according to the present invention, the at least one polyether-modified polysiloxane is present in an amount of 2 wt% or more relative to the total weight of the at least one primary agent, preferably in an amount of in the range of 2 to 10 wt% or in the range of 4% to 10 wt% relative to the total weight of the at least one primary agent, more preferably in an amount in the range of 2% to 8% by weight relative to the total weight of the at least one primary agent, and even more preferably in an amount in the range of 3 wt% to 5 wt% relative to the total weight of the at least one primary agent. The amount of at least one polyether-modified polysiloxane can be adjusted according to the addition of other components in the two-component coating composition of the present invention, especially aqueous components, and is not limited to the above-mentioned amount range.

As used herein, "polyether-modified polysiloxane" refers to a polymer whose molecular skeleton contains -Si-O- structural units. In some embodiments of the present invention, the at least one polyether-modified polysiloxane has the structure of the following formula I: 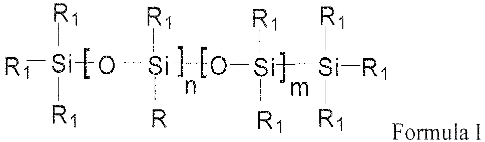
wherein R₁ is independently selected from the group consisting of C1-C6 alkyl at each occurrence, preferably from methyl;
R represents a polyether residue;
the sum of m and n is an integer between 30 and 250; and
the ratio of m to n is in the range of 3:7 to 9:1.

In a preferred embodiment of the present invention, the at least one polyether-modified polysiloxane is a polyether-modified polysiloxane with an effective silicon content of 30 wt% or more. Preferably, the at least one polysiloxane has an effective silicon content of 40 wt% or higher, preferably an effective silicon content of 50 wt% or higher, more preferably an effective silicon content of 60 wt% or higher, still more preferably an effective silicon content of 65 wt% or higher, and even more preferably an effective silicon content of 70 wt% or higher, and still even more preferably an effective silicon content of 75 wt% or higher. According to the present invention, in view of the leveling properties of the coating, it is particularly advantageous for at least one polysiloxane to have a higher effective silicon content. However, from a practical point of view, the effective silicon content does not exceed 99 wt%, preferably does not exceed 95 wt%, and more preferably does not exceed 90 wt%. The effective silicon content is usually provided by the supplier. The inventors found that if the effective silicon content is too low, the agent has insufficient ability to reduce the surface tension of the coating, resulting in the coating not being able to effectively adhere to the substrate or the underlying layer to flow. The at least one polyether-modified polysiloxane can be prepared by a suitable method known to those of ordinary skill in the art, or any suitable commercially available product, such as BYK 346 from BYK Company, can be used.

In the two-component coating composition according to the present invention, the at least one primary agent may also optionally comprise an aqueous dispersion of a hydroxyl-functional acrylic polymer.

In one embodiment of the present invention, the hydroxy-functional acrylic polymer is an emulsion polymerized latex polymer, which aqueous dispersion is prepared by an emulsion polymerization, so it can also be referred to as "aqueous latex" briefly. The method for preparing the aqueous latex is known in the art. For example, the aqueous latex can be prepared by an emulsion polymerization process known to those skilled in the art. The emulsion polymerization process usually comprises the following steps: optionally under the action of a suitable emulsifier and/or dispersion stabilizer and with the aid of stirring, dispersing polymerizable monomers into an aqueous medium to form an emulsion, and initiating the polymerization of monomers for example, by adding an initiator. In the present invention, the resulting polymer particles can be modified by, for example, the modification of organic functional groups (including, but not limited to, carboxyl, hydroxyl, amino, sulfonic acid groups, and the like) to obtain an aqueous latex with desired properties such as dispersibility. Therefore, in the present invention, the term "aqueous latex" includes not only a dispersion of unmodified polymer particles in an aqueous medium, but also a dispersion of polymer particles modified with organic functional groups in an aqueous medium.

The size of polymer particles in the above prepared aqueous latex or commercially available aqueous latex can be measured by a z-average particle diameter known in the art, which refers to the size of the particles measured by a dynamic light scattering methods, such as with Marvlen Zetasizer 3000HS microparticles analyzer. In the present invention, the z-average particle diameter of the polymer particles in the aqueous latex may be at most 200 nm, preferably less than 180 nm, and more preferably less than 150 nm. However, the z-average particle diameter of the polymer particles is preferably at least 50 nm, preferably at least 80 nm or more, and more preferably at least 100 nm or more. In a preferred embodiment of the present invention, the polymer particles of the aqueous latex may have a z-average particle diameter in the range of 100 to 200 nm.

In another embodiment of the present invention, the hydroxy-functional acrylic polymer is an organic solution polymerized acrylic polymer, which aqueous dispersion is obtained by redispersing the as-prepared polymer into an aqueous medium. The method for preparing acrylic polymer by an organic solution polymerization is known in the art. For example, the hydroxyl-functional acrylic polymer can be prepared by a solution polymerization process known to those skilled in the art. The solution polymerization process generally comprises the following steps: dissolving polymerizable monomers in an organic solvent, and initiating the polymerization of the monomers for example, by adding an initiator, and then performing post-treatment to obtain a product. In the present invention, the polymer particles can be modified by, for example, modification of hydrophilic functional groups (including, but not limited to, cationic hydrophilic groups, non-ionic hydrophilic groups, anionic hydrophilic groups, and the like), thereby obtaining the required properties, such as water dispersibility.

According to the present invention, the backbone of the hydroxyl-containing acrylic polymer may have any appropriate terminal groups. In some embodiments, the backbone of the acrylic polymer is hydroxyl-terminated and/or carboxyl-terminated, more preferably hydroxyl-terminated.

The hydroxyl functional acrylic polymer can have any suitable hydroxyl value. The hydroxyl value is usually expressed as the number of milligrams of potassium hydroxide (KOH) equivalent to the hydroxyl content in 1 gram of the hydroxyl-containing substance. According to the present invention, the hydroxyl functional acrylic polymer has a hydroxyl value of at least 5 mg KOH/g polymer, more preferably at least 10 mg KOH/g polymer, and even more preferably at least 20 mg KOH/g polymer but the hydroxyl value should preferably not exceed 200 mg KOH/g polymer. In certain preferred embodiments, the polymer has 5 mg KOH/g polymer to about 150 mg KOH/g polymer, even more preferably about 10 mg KOH/g polymer to about 100 mg KOH/g polymer, and most preferably about 20 mg KOH/g polymer to about 80 mg KOH/g polymer.

The hydroxyl functional acrylic polymer can have any suitable acid value. The acid value is usually expressed as the number of milligrams of KOH required to titrate a 1g sample to a specified end point. The method for determining the acid value is well known in the art. The appropriate acid value range can vary according to various considerations including, for example, whether water dispersibility is required. In some embodiments, the polymer has an acid value of at least about 5 mg KOH/g polymer, more preferably at least about 15 mg KOH/g polymer, and even more preferably at least about 30 mg KOH/g polymer. However, considering the actual application, the acid value of the polymer is usually less than about 200 mg KOH/g polymer, preferably less than about 150 mg KOH/g polymer, more preferably less than 100 mg KOH/g polymer, and even more preferably less than 50 mg KOH /g polymer.

According to the present invention, the hydroxyl-containing acrylic polymer in the aqueous dispersion can be any type of acrylic polymer, including acrylates polymers, styrene-acrylates polymers, and silicone-modified acrylates polymers, polyurethane-modified acrylates polymer or a combination thereof. In some embodiments of the present invention, the hydroxyl-containing acrylic polymer comprises acrylates polymers.

In the present invention, the aqueous dispersion of hydroxy-functional acrylic polymer can be prepared by a suitable polymerization method known to those of ordinary skill in the art, or may be any suitable commercially available product as an example, such as VIACRYL VSC 6276 from Allnex, Neocryl A633 from DSM, WQ1229P from Valspar, Houxian 2006 from Monkey Xian, and the like.

Preferably, in the two-component coating composition according to the present invention, the amount of the aqueous dispersion of the hydroxy-functional acrylic polymer can be adjusted as required, for example, in the range of 0 to 15 wt%.

If necessary, in the coating composition according to the present invention, the at least one primary agent may optionally contain other additives, which do not adversely affect the coating composition or the cured coating obtained therefrom. Appropriate additives include, for example, those that can improve the processing or manufacturing properties of the composition, enhance the aesthetics of the composition, or improve the specific functional properties or characteristics of the coating composition or the cured composition obtained therefrom, such as adhesion to the substrate. The additives that can be included are carriers, additional polymers, emulsifiers, pigments, metal powders or pastes, fillers, anti-migration aids, antibacterial agents, extenders, lubricants, coagulants, wetting agents, biocides agents, plasticizers, defoamers, colorants, waxes, antioxidants, corrosion inhibitors, flow control agents, thixotropic agents, dispersants, UV stabilizers, scavengers, or combinations thereof. The content of each optional component is sufficient to achieve its intended purpose, but preferably, such content does not adversely affect the coating composition or the cured coating obtained therefrom.

Any suitable liquid carrier can be used to adjust the viscosity of the at least one primary agent. Suitable liquid carriers comprise organic solvents, water and mixtures thereof. The liquid carrier is selected to adjust the viscosity of the at least one primary agent for further formulation.

Suitable liquid carriers comprise alcohols (such as ethanol, n-propanol, isopropanol, n-butanol, isobutanol, and the like); ketones (such as acetone, 2-butanone, cyclohexanone, methyl aryl ketone, ethyl aryl ketone, methyl isoamyl ketone, and the like); glycols (such as butyl glycol); glycol ethers (such as ethylene glycol monomethyl ether, ethylene glycol monoethyl ether, ethylene glycol monobutyl ether, propylene glycol monomethyl ether, methoxypropanol, dipropylene glycol methyl ether, and the like), glycol esters (such as butyl glycol acetate, methoxypropyl acetate and the like); and its mixtures. Preferably, glycol ethers are used as organic co-solvents.

The amount of the liquid carrier contained in the at least one primary agent may vary, for example, according to the coating method and the required viscosity. A preferred primary agent comprises 2-10% by weight of a liquid carrier, more preferably 2-8% by weight of a liquid carrier.

### Aqueous isocyanate curing agent(s)

According to the present invention, the aqueous coating composition contains at least one aqueous isocyanate curing agent. As mentioned above, at least one aqueous isocyanate curing agent refers to any compound or polymer with latent isocyanate functional groups. Under film-forming conditions, the latent isocyanate functional groups in the aqueous isocyanate curing agent can be deprotected to form isocyanates, so that it can crosslink with the hydroxyl functional groups of the hydroxyl functional acrylic polymer and the fatty acid-derived polyol in the at least one primary agent. As a result, the aqueous coating composition of the present invention can form a coating.

In the present invention, the aqueous isocyanate curing agent can be prepared by a suitable method known to those of ordinary skill in the art, or may be any suitable commercially available product as an example, such as WJ0526 from Valspar, Bayhydur XP2655, Bayhydur XP2547, Aquolin 270 from Wanhua, Aquolin 268 from Wanhua, BASF HW2100.

According to the present invention, the weight ratio of the at least one aqueous isocyanate curing agent to the at least one primary agent can vary from 1:2 to 2:1, preferably 1:1.

According to the present disclosure, the two-component aqueous coating composition can be prepared by simply mixing the at least one primary agent and the at least one aqueous isocyanate curing agent in a mixing device at a predetermined weight ratio before application. During the application process, according to requirements, the obtained mixture is mixed with a certain amount of inert diluent to obtain a coating composition that meets the application requirements. In a preferred embodiment of the present invention, the two-component aqueous coating composition still has an application solid content of 70 to 90 wt% when it can be applied (for example, when it reaches an application viscosity of 120 s or lower at 25°C). In another preferred embodiment of the present invention, the two-component water-based coating composition has 300 g/L or lower volatile organic compounds when it can be applied (for example, when it reaches an application viscosity of 120s or lower). VOC) content. In yet another preferred embodiment of the present invention, the two-component water-based coating composition has an application solid content of 70 to 90 wt% and has a volatile organic compound (VOC) content of 300 g/L or less when it can be applied (for example, when it reaches an application viscosity of 120s or lower).

The resulting coating composition can be applied in a variety of ways that are familiar to those skilled in the art, including spraying (e.g., air assisted, airless or electrostatic spraying), brushing, rolling, flooding and dipping. In an embodiment of the present disclosure, the resulting coating composition is coated by spraying. The coating composition can be applied in various wet film thickness. In an embodiment of the present disclosure, the coating composition is applied in such a wet film thickness that the formed coating has a dry thickness preferably from about 13 to about 260 µm (about 0.5 to about 10 mils) and more preferably from about 25 to about 75 µm (about 1 to about 3 mils). The applied coating may be cured by air drying or by accelerating drying with various drying devices (e.g., ovens) that are familiar to those skilled in the art.

Compared with the traditional two-component aqueous coating composition, the coating formed by the two-component aqueous coating composition of the present invention has one or more, preferably more, and more preferably all of the following advantages:
Very good fullness, the catheters of the wooden substrate are basically filled;
Very high transparency; and
The higher paint film hardness, for example, 1-2H. On the contrary, the traditional two-component aqueous coating composition can only reach the hardness of F-H under the same paint film thickness.

Thus, the two-component coating composition according to the present invention has a wide range of applications, and can be used as a sealing primer, a transparent primer, a topcoat, a solid color paint, and the like. Therefore, the present invention also relates to a wooden product, which comprises a wooden substrate having at least one main surface; and one or more paint films formed from the two-component aqueous coating composition according to the present invention which is directly or indirectly coated on the main surface. In some embodiments, the two-component aqueous coating composition of the present invention can be coated on a wooden substrate as one or more, preferably all, of a sealer primer, a second primer, and a third primer.

As the wooden substrate used to manufacture the wooden article of the present invention, any suitable wooden substrate known in the art can be used. In the present application, the term "wooden substrate" refers to any material of cellulose/lignin derived from the hard, fibrous structural tissue in the stems and roots of trees or other woody plants. Wood includes, for example, hardwood and softwood lumber directly cut from trees, as well as engineered wood composites made from strands, particles, fibers or veneers of wood. Examples of wood composites include, but are not limited to, plywood, oriented strand board (OSB), medium-density fiberboard (MDF), particle boards, and the like.

As an exemplary wooden substrate, one or more of hardwood, chestnut, oak, red hook chestnut, camellia, press wood, Douglas fir, Japanese cedar, American cypress, Japanese red pine, Japanese cypress, water walnut, black walnut, maple, Japanese beech, Japanese paulownia, birch, Salina, magnolia, ash, teak, oak, catalpa, camphor wood, fir, oak, rubber wood may be used.

According to the present invention, the wood article thus obtained can be used for the following applications, including, but not limited to: household furniture, such as tables, chairs, cabinets, and the like; bedroom and bathroom furniture; office furniture; custom furniture, such as school and children's furniture, hospitals furniture, restaurant and hotel furniture, kitchen cabinets and furniture; panels for interior design; indoor and outdoor windows and doors; indoor and outdoor window and door frames; outdoor and indoor wall panels and wooden floors.

### Examples

The present disclosure is more particularly described in the following examples that are intended as illustrations only, since numerous modifications and variations within the scope of the present disclosure will be apparent to those skilled in the art. Unless otherwise noted, all parts, percentages, and ratios reported in the following examples are on a weight basis, and all reagents used in the examples are commercially available and used directly without further treatment.

### Test Methods

Unless otherwise stated, the following test methods are used in the examples.

**Miscibility:** The components to be tested were mixed in different proportions, and stirred thoroughly. After that, the resulting mixture was observed visually for its miscibility. Visual compatibility was classified into three rates: "good," "fair," and "poor."

**Water Miscibility:** The mixture to be tested was mixed with water, and stirred thoroughly. After that, the resulting mixture was observed visually for its miscibility with water. The miscibility was classified into three rates: "very easy," "easy," and "poor."

**VOC content:** was measured according to GBT23986-2009.

**Fullness:** Films were formed from coating compositions with the same materials under the same process conditions. After that, the films were visually compared for the fullness of each film.

**Transparency:** Films were formed from coating compositions with the same materials under the same process conditions. After that, the films were visually compared for the transparency of each film.

**Pencil hardness:** was measured according to GBT6739-2006.

### Material

The raw materials used in each example are listed in Table 1 below.

**Table 1**

| **Product Name** | **Description** |
|---|---|
| Castor oil modified polyol | Fatty acid derived polyols with a solid content of 100% |
| Polysiloxane | Polyether modified polysiloxane |
| Resin | Aqueous hydroxyl acrylics resin |
| Curing Agent | Aqueous isocyanate curing agent |
| Dipropylene glycol methyl ether (DPM) | Carrier |
| Control 1 | Available two-component coating composition with excellent fullness |
| Control 2 | Currently prevalent two-component water-based coating composition |

### Coating composition

The fatty acid derived polyol, the at least one polyether modified polysiloxane, DPM, and the aqueous hydroxy acrylic resin were added in the amount shown in Table 2 below to a mixing container, and then mixed and stirred at 800-1000 rpm to be homogenous, thereby obtaining at least one primary agent. The at least one primary agent thus prepared and the at least one aqueous isocyanate curing agent were mixed at a weight ratio of 1:1, and the resulting mixtures were observed for determining its miscibility and water miscibility.

**Table 2: The composition and miscibility of each two-component coating composition.**

| | | **CEx. 1** | **CEx. 2** | **CEx. 3** | **Ex. 1** | **Ex. 2** | **Ex. 3** | **CEx. 4** | **CEx. 5** | **Ex. 4** | **Ex. 5** | **Ex. 6** | **Ex. 7** | **Ex. 8** |
|---|---|---|---|---|---|---|---|---|---|---|---|---|---|---|
| **Primary agent** | **Polyol** | 95 | 94.5 | 94 | 93 | 91 | 89 | 85 | 84 | 83 | 81 | 79 | 77 | 75 |
| | **DPM** | 5 | 5 | 5 | 5 | 5 | 5 | 5 | 5 | 5 | 5 | 5 | 5 | 5 |
| | **Polysiloxane** | - | 0.5 | 1 | 2 | 4 | 6 | - | 1 | 2 | 4 | 6 | 8 | 10 |
| | **Aqueous hydroxyl acrylics resin** | 0 | 0 | 0 | 0 | 0 | 0 | 10 | 10 | 10 | 10 | 10 | 10 | 10 |
| | **Total** | 100 | 100 | 100 | 100 | 100 | 100 | 100 | 100 | 100 | 100 | 100 | 100 | 100 |
| | **Self-Miscibility** | Good | Good | Good | Good | Good | Good | Poor | Poor | Fair | Good | Good | Good | Good |
| **Curing agent** | **Aqueous curing agent** | 100 | 100 | 100 | 100 | 100 | 100 | 100 | 100 | 100 | 100 | 100 | 100 | 100 |
| **Primary agent +curing agent** | **Ratio by weight** | 1:1 | 1:1 | 1:1 | 1:1 | 1:1 | 1:1 | 1:1 | 1:1 | 1:1 | 1:1 | 1:1 | 1:1 | 1:1 |
| | **Miscibility** | Poor | Poor | Poor | Good | Good | Good | Poor | Poor | Fair | Good | Good | Good | Good |
| | **Water Miscibility** | Poor | Poor | Poor | Easy | Easy | Very easy | Poor | Poor | Easy | Easy | Easy | Very easy | Very easy |

It can be seen from the results in Table 2 that in Examples 1-8, the fatty acid-derived polyols and a relatively large amount (for example, at least 2 wt%) of polyether-modified polysiloxanes were combined, which resulted in not only the fatty acid-derived polyols to have very good compatibility with the aqueous dispersion of the hydroxy acrylic polymer in the at least one primary agent, and but the at least one primary agent also to have very good compatibility with the aqueous isocyanate curing agent.

### Coating

Prior to application, the two-component aqueous coating composition as prepared according to example 3, the T 81174 from Guangdong Huarun Painting Co., Ltd. and the WTD 8500 from Guangdong Huarun Painting Co., Ltd. were diluted with DPM or water as shown in table 3 and the diluted coating compositions were coated on the surface of a black walnut veneer substrate 1-3 times as a first primer, a second primer and a third primer, respectively.

**Table 3**

| | | **First sealing primer** | **Second primer** | **Third primer** |
|---|---|---|---|---|
| **Ratio by weight of primary agent, curing agent and carrier** | Ex. 3 | 1:1:0.6(DPM) | 1:1:0.3(DPM or water) | 1:1:0.3(DPM or water) |
| | T81174 | 1:0.25:0.1(DPM) | 1:0.25:0.1(DPM or water) | 1:0.25:0.1(DPM or water) |
| | WTD8500 | 1:0.2:0.2(DPM) | 1:0.3:0.2(DPM or water) | 1:0.3:0.2(DPM or water) |
| **Application solid content (%)** | Ex. 3 | 76 | 87 | 87 |
| | T81174 | 38 | 38 | 38 |
| | WTD8500 | 32 | 32 | 32 |
| **VOC(g/L)** | Ex. 3 | 288 | 156 | 156 |
| | T81174 | 140 | 140 | 140 |
| | WTD8500 | 220 | 220 | 220 |
| **Application viscosity (No. 4 Iwata Cup)** | Ex. 3 | 57" | 107" | 107" |
| | T81174 | 40" | 40" | 40" |
| | WTD8500 | 50" | 50" | 50" |
| **Coating amount(g/m²)** | Ex. 3 | 45 | 120 | 120 |
| | T81174 | 100 | 120 | 120 |
| | WTD8500 | 100 | 120 | 120 |

Then, the respective coatings of the three primers applied according to Table 3 were respectively characterized. The characterization results are summarized in Table 4 below and Figure 1.

**Table 4**

| | **Present invention** | **T81174 Primer** | **WTD8500 Primer** |
|---|---|---|---|
| **Fullness** | Very good, the catheter is fully filled | Fair, about 60% of catheter is filled | Fair, only about 40% of catheter is filled |
| **Transparency** | Excellent | Good | Fair |
| **Pencil hardness at room temperature for 4 weeks** | H-2H | H | F |

It was shown from the results in Table 4 above that the two-component coating composition of the present invention coated on the surface of the black walnut veneer substrate is superior to the T81174 primer with excellent fullness on the market and the prevalent aqueous two-component WTD8500 primer on the market in terms of the coating fullness, transparency and hardness. Moreover, the inventors of the present invention also found that the two-component coating composition of the present invention also had an excellent grain puffing resistance when used as a sealing primer.

## Claims

1. A two-component aqueous coating composition, the coating composition comprising:
a) at least one primary agent, the at least one primary agent comprising:
i) at least one fatty acid derived polyol;
ii) at least one polyether modified polysiloxane; and
b) at least one aqueous polyisocyanate curing agent,
wherein the at least one polyether modified polysiloxane is present in an amount of at least 2 wt% relative to the total weight of the at least one primary agent, and wherein the at least one fatty acid-derived polyol has a solid content of 90 wt% or higher.

2. The two-component aqueous coating composition according to claim 1, wherein the at least one polyether-modified polysiloxane is present in an amount in the range of 2-10 wt%, more preferably in the range of 3-5 wt%, relative to the total weight of the at least one primary agent.

3. The two-component aqueous coating composition according to claim 1 or 2, wherein the at least one fatty acid derived polyol comprises:
(A-1) at least one product of at least one hydroxyl-containing fatty acid with at least one polyhydric alcohol via esterification;
(A-2) at least one product obtained from at least one hydroxyl-containing unsaturated fatty acid via polymerization;
(A-3) at least one product obtained from at least one polymer of at least one unsaturated fatty acid via reduction of carboxyl group;
(A-4) at least one product obtained from at least one unsaturated fatty acid and/or a at least one esterification product of at least one unsaturated fatty acid with at least one polyhydric alcohol via modification by introducing at least one hydroxyl group;
(A-5) at least one hydroxyl functional resin comprising at least one polyhydric alcohol, at least one polybasic acid, at least one fatty acid, or combinations thereof; and
optionally, at least one monofunctional acid via condensation.

4. The two-component aqueous coating composition according to claims 1-3, wherein the at least one fatty acid-derived polyol has a solid content of of 95 wt% or higher, preferably has a solid content of 100 wt%.

5. The two-component aqueous coating composition according to claims 1-4, wherein the at least one fatty acid-derived polyol has a viscosity of at most 800 mPas, as measured using a rotational viscometer at 25°C.

6. The two-component aqueous coating composition according to claims 1-5, wherein the at least one polyether modified polysiloxane has an effective silicon content of 30 wt% or higher, preferably of 60 wt% or higher.

7. The two-component aqueous coating composition according to claims 1-6, wherein the at least one polyether-modified polysiloxane has the structure of the following formula I: 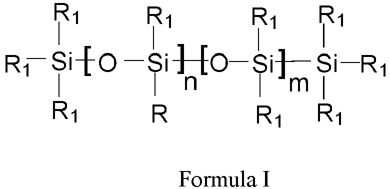 wherein
R₁ is independently selected from the group consisting of C1-C6 alkyl at each occurrence, preferably from methyl;
R is a polyether residue;
the sum of m and n is an integer between 30 and 250; and
the ratio of m to n is in the range of 3:7 to 9:1.

8. The two-component aqueous coating composition according to any one of claims 1-7, wherein the at least one primary agent comprises, relative to the total weight of the at least one primary agent,
i) 60 to 97.9 wt% of the at least one fatty acid derived polyol;
ii) 2 to 8 wt% of the at least one polyether modified polysiloxane;
iii) 0.1-10 wt% of the at least one organic solvent; and
iv) 0 to 30 wt% of the at least one aqueous dispersion of hydroxy acrylic polymer.

9. The two-component aqueous coating composition according to any one of claims 1-8, wherein the weight ratio of the at least one primary agent to the at least one aqueous isocyanate curing agent is in the range of 1:2 to 2:1, preferably 1:1.

10. The two-component aqueous coating composition according to any one of claims 1-9, wherein the two-component aqueous coating composition has an application solid content of 70 to 90 wt% when reaching an application viscosity of 120 s or less at 25°C.

11. The two-component aqueous coating composition according to any one of claims 1-10, wherein the two-component aqueous coating composition has a volatile organic compound (VOC) content of 300 g/L or less as measured using GBT23986-2009 when reaching an application viscosity of 120 s or less at 25°C.

12. A wooden article comprising
a wooden substrate having at least one main surface; and
at least one paint film formed from the two-component aqueous coating composition according to any one of claims 1-11 which is directly or indirectly coated on the at least one main surface.

## Patentansprüche

1. Wässrige Zweikomponentenbeschichtungszusammensetzung, die Beschichtungszusammensetzung umfassend:
a) mindestens einen primären Wirkstoff, der mindestens eine primäre Wirkstoff umfassend:
i) mindestens ein von einer Fettsäure abgeleitetes Polyol;
ii) mindestens ein polyethermodifiziertes Polysiloxan; und
b) mindestens ein wässriges Polyisocyanathärtungsmittel,
wobei das mindestens eine polyethermodifizierte Polysiloxan in einer Menge von zu mindestens 2 Gew.-% bezogen auf das Gesamtgewicht des mindestens einen Primärwirkstoffs vorhanden ist und wobei das mindestens eine von einer Fettsäure abgeleitete Polyol einen Feststoffgehalt von zu 90 Gew.-% oder mehr aufweist.

2. Wässrige Zweikomponentenbeschichtungszusammensetzung nach Anspruch 1, wobei das mindestens eine polyethermodifizierte Polysiloxan in einer Menge in dem Bereich von zu 2-10 Gew.-%, mehr bevorzugt in dem Bereich von 3-5 Gew.-%, bezogen auf das Gesamtgewicht des mindestens einen Primärwirkstoffs vorhanden ist.

3. Wässrige Zweikomponentenbeschichtungszusammensetzung nach Anspruch 1 oder 2, wobei das mindestens eine von einer Fettsäure abgeleitete Polyol umfasst:
(A-1) mindestens ein Produkt aus mindestens einer hydroxylhaltigen Fettsäure mit mindestens einem mehrwertigen Alkohol über Veresterung;
(A-2) mindestens ein Produkt, das aus mindestens einer hydroxylhaltigen ungesättigten Fettsäure über Polymerisation erhalten wird;
(A-3) mindestens ein Produkt, das aus mindestens einem Polymer mindestens einer ungesättigten Fettsäure über Reduktion einer Carboxylgruppe erhalten wird;
(A-4) mindestens ein Produkt, das aus mindestens einer ungesättigten Fettsäure und/oder mindestens einem Veresterungsprodukt mindestens einer ungesättigten Fettsäure mit mindestens einem mehrwertigen Alkohol über Modifikation durch Einführen mindestens einer Hydroxylgruppe erhalten wird;
(A-5) mindestens ein hydroxylfunktionelles Harz, umfassend mindestens einen mehrwertigen Alkohol, mindestens eine mehrbasige Säure, mindestens eine Fettsäure oder Kombinationen davon; und
optional mindestens eine monofunktionelle Säure über Kondensation.

4. Wässrige Zweikomponentenbeschichtungszusammensetzung nach den Ansprüchen 1 bis 3, wobei das mindestens eine von einer Fettsäure abgeleitete Polyol einen Feststoffgehalt von zu 95 Gew.-% oder mehr aufweist, vorzugsweise einen Feststoffgehalt von zu 100 Gew.-% aufweist.

5. Wässrige Zweikomponentenbeschichtungszusammensetzung nach den Ansprüchen 1 bis 4, wobei das mindestens eine von einer Fettsäure abgeleitete Polyol eine Viskosität von höchstens 800 mPas aufweist, gemessen unter Verwendung eines Rotationsviskosimeters bei 25 °C.

6. Wässrige Zweikomponentenbeschichtungszusammensetzung nach den Ansprüchen 1 bis 5, wobei das mindestens eine polyethermodifizierte Polysiloxan einen wirksamen Siliziumgehalt von zu 30 Gew.-% oder mehr, vorzugsweise von zu 60 Gew.-% oder mehr aufweist.

7. Wässrige Zweikomponentenbeschichtungszusammensetzung nach den Ansprüchen 1 bis 6, wobei das mindestens eine polyethermodifizierte Polysiloxan die Struktur der folgenden Formel I aufweist: 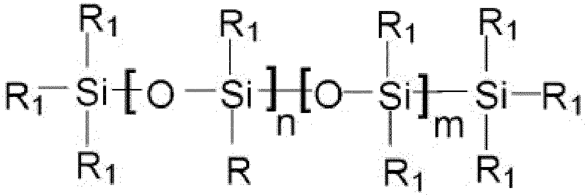 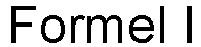 wobei
R₁ bei jedem Auftreten unabhängig aus der Gruppe ausgewählt ist, bestehend aus C1-C6-Alkyl, vorzugsweise aus Methyl;
R ein Polyetherrest ist;
die Summe von m und n eine ganze Zahl zwischen 30 und 250 ist; und
das Verhältnis von m zu n in dem Bereich von 3:7 bis 9:1 liegt.

8. Wässrige Zweikomponentenbeschichtungszusammensetzung nach einem der Ansprüche 1 bis 7, wobei der mindestens eine Primärwirkstoff, bezogen auf das Gesamtgewicht des mindestens einen Primärwirkstoffs, umfasst:
i) zu 60 bis 97,9 Gew.-% das mindestens eine von einer Fettsäure abgeleitete Polyol;
ii) zu 2 bis 8 Gew.-% das mindestens eine polyethermodifizierte Polysiloxan;
iii) zu 0,1-10 Gew.-% das mindestens eine organische Lösungsmittel; und
iv) zu 0 bis 30 Gew.-% die mindestens eine wässrige Dispersion von Hydroxyacrylpolymer.

9. Wässrige Zweikomponentenbeschichtungszusammensetzung nach einem der Ansprüche 1 bis 8, wobei das Gewichtsverhältnis des mindestens einen Primärwirkstoffs zu dem mindestens einen wässrigen Isocyanathärtungsmittel in dem Bereich von 1:2 bis 2:1, vorzugsweise 1:1, liegt.

10. Wässrige Zweikomponentenbeschichtungszusammensetzung nach einem der Ansprüche 1 bis 9, wobei die wässrige Zweikomponentenbeschichtungszusammensetzung einen Anwendungsfeststoffgehalt von zu 70 bis 90 Gew.-% aufweist, wenn bei 25 °C eine Anwendungsviskosität von 120 s oder weniger erreicht wird.

11. Wässrige Zweikomponentenbeschichtungszusammensetzung nach einem der Ansprüche 1 bis 10, wobei die wässrige Zweikomponentenbeschichtungszusammensetzung einen Gehalt an flüchtigen organischen Verbindungen (VOC) von 300 g/l oder weniger aufweist, gemessen unter Verwendung von GBT23986-2009, wenn bei 25 °C eine Anwendungsviskosität von 120 s oder weniger erreicht wird.

12. Holzartikel, umfassend
ein Holzsubstrat, das mindestens eine Hauptoberfläche aufweist; und
mindestens einen Lackfilm, der aus der wässrigen Zweikomponentenbeschichtungszusammensetzung nach einem der Ansprüche 1 bis 11 ausgebildet ist, mit dem die mindestens eine Hauptoberfläche direkt oder indirekt beschichtet ist.

## Revendications

1. Composition aqueuse de revêtement à deux composants, la composition de revêtement comprenant :
a) au moins un agent primaire, l'au moins un agent primaire comprenant :
i) au moins un polyol dérivé d'acide gras ;
ii) au moins un polysiloxane à modification polyéther ; et
b) au moins un agent de durcissement polyisocyanate aqueux,
dans laquelle l'au moins un polysiloxane à modification polyéther est présent en une quantité d'au moins 2 % en poids par rapport au poids total de l'au moins un agent primaire, et dans laquelle l'au moins un polyol dérivé d'acide gras a une teneur en matières solides de 90 % en poids ou plus élevée.

2. Composition aqueuse de revêtement à deux composants selon la revendication 1, dans laquelle l'au moins un polysiloxane à modification polyéther est présent en une quantité dans la plage de 2 à 10 % en poids, plus préférablement dans la plage de 3 à 5 % en poids, par rapport au poids total de l'au moins un agent primaire.

3. Composition aqueuse de revêtement à deux composants selon la revendication 1 ou 2, dans laquelle l'au moins un polyol dérivé d'acide gras comprend :
(A-1) au moins un produit d'au moins un acide gras contenant un hydroxyle avec au moins un alcool polyhydrique par l'intermédiaire d'une estérification ;
(A-2) au moins un produit obtenu à partir d'au moins un acide gras insaturé contenant un hydroxyle par l'intermédiaire d'une polymérisation ;
(A-3) au moins un produit obtenu à partir d'au moins un polymère d'au moins un acide gras insaturé par l'intermédiaire d'une réduction de groupe carboxyle ;
(A-4) au moins un produit obtenu à partir d'au moins un acide gras insaturé et/ou au moins un produit d'estérification d'au moins un acide gras insaturé avec au moins un alcool polyhydrique par l'intermédiaire d'une modification en introduisant au moins un groupe hydroxyle ;
(A-5) au moins une résine à fonctionnalité hydroxyle comprenant au moins un alcool polyhydrique, au moins un acide polybasique, au moins un acide gras, ou des combinaisons de ceux-ci ; et
facultativement, au moins un acide monofonctionnel par l'intermédiaire d'une condensation.

4. Composition aqueuse de revêtement à deux composants selon les revendications 1 à 3, dans laquelle l'au moins un polyol dérivé d'acide gras a une teneur en matières solides de 95 % en poids ou plus élevée, de préférence a une teneur en matières solides de 100 % en poids.

5. Composition aqueuse de revêtement à deux composants selon les revendications 1 à 4, dans laquelle l'au moins un polyol dérivé d'acide gras a une viscosité n'excédant pas 800 mPa.s, telle que mesurée à l'aide d'un viscosimètre rotatif à 25 °C.

6. Composition aqueuse de revêtement à deux composants selon les revendications 1 à 5, dans laquelle l'au moins un polysiloxane à modification polyéther a une teneur effective en silicium de 30 % en poids ou plus élevée, de préférence de 60 % en poids ou plus élevée.

7. Composition aqueuse de revêtement à deux composants selon les revendications 1 à 6, dans laquelle l'au moins un polysiloxane à modification polyéther a la structure de la formule I suivante : 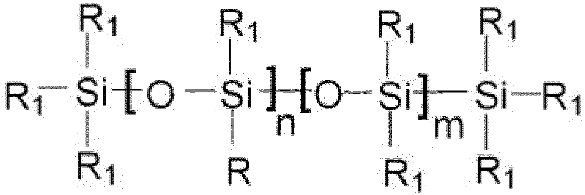 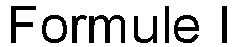 dans laquelle
R¹ est indépendamment choisi parmi le groupe constitué par alkyle en C1 à C6 à chaque occurrence, de préférence parmi méthyle ;
R est un résidu polyéther ;
la somme de m et de n est un nombre entier entre 30 et 250 ; et
le rapport de m à n est dans la plage de 3:7 à 9:1.

8. Composition aqueuse de revêtement à deux composants selon l'une quelconque des revendications 1 à 7, dans laquelle l'au moins un agent primaire comprend, par rapport au poids total de l'au moins un agent primaire,
i) 60 à 97,9 % en poids de l'au moins un polyol dérivé d'acide gras ;
ii) 2 à 8 % en poids de l'au moins un polysiloxane à modification polyéther ;
iii) 0,1 à 10 % en poids de l'au moins un solvant organique ; et
iv) a à 30 % en poids de l'au moins une dispersion aqueuse de polymère hydroxyacrylique.

9. Composition aqueuse de revêtement à deux composants selon l'une quelconque des revendications 1 à 8, dans laquelle le rapport pondéral de l'au moins un agent primaire à l'au moins un agent de durcissement isocyanate aqueux est dans la plage de 1:2 à 2:1, de préférence 1:1.

10. Composition aqueuse de revêtement à deux composants selon l'une quelconque des revendications 1 à 9, dans laquelle la composition aqueuse de revêtement à deux composants a une teneur en matières solides d'application de 70 à 90 % en poids lorsqu'on atteint une viscosité d'application de 120 s ou moins à 25 °C.

11. Composition aqueuse de revêtement à deux composants selon l'une quelconque des revendications 1 à 10, dans laquelle la composition aqueuse de revêtement à deux composants a une teneur en composés organiques volatils (COV) de 300 g/L ou moins telle que mesurée à l'aide de GBT23986-2009 lorsqu'on atteint une viscosité d'application de 120 s ou moins à 25 °C.

12. Article en bois comprenant
un substrat en bois ayant au moins une surface principale ; et
au moins un film de peinture formé à partir de la composition aqueuse de revêtement à deux composants selon l'une quelconque des revendications 1 à 11 qui est directement ou indirectement revêtu sur l'au moins une surface principale.
